# EUROPEAN PATENT SPECIFICATION

(11) **EP 1 101 782 B1**
(45) Date of publication and mention of the grant of the patent: **21.06.2006**
(21) Application number: 00204030.1
(22) Date of filing: 16.11.2000
(51) Int. Cl.: C08G 18/10

(54) **High performance microcellular foam and manufacturing method and apparatus thereof**
Mikrozellulärer Hochleistungsschaum und Herstellungsverfahren und Vorrichtung dafür
Mousse microcellulaire à haute performance, procédé et dispositif correspondant

(30) Priority: 16.11.1999 US 165857 P
(43) Date of publication of application: 23.05.2001
(73) Proprietor: C.U.E., Inc., Cranberry Township, PA 16066 (US)
(72) Inventor: Serman, Carl J., Cranbery Township, PA 16066 (US); Valentine, Kary L., Mars, PA 16046 (US)
(74) Representative: 't Jong, Bastiaan Jacobus

(56) References cited:
- WO-A-97/23528
- WO-A-99/29752
- US-A- 4 734 232
- US-A- 5 246 977
- US-A- 5 891 927
- PATENT ABSTRACTS OF JAPAN vol. 1999, no. 01, 29 January 1999 (1999-01-29) & JP 10 279046 A (NIPPON MEKTRON LTD), 20 October 1998 (1998-10-20)

## Description

### BACKGROUND OF THE INVENTION

### 1. Field of the Invention

The present invention relates to foam formulations and manufacturing methods and, in particular, to high performance microcellular foam, methods of manufacture and applications thereof.

### 2. Description of the Prior Art

Solid cast polyurethane systems generally result from the reaction of an isocyanate, a short chain glycol (or amine), and a long chain polyol. To achieve optimal properties, the number of reactive isocyanate and hydroxyl (amine) groups for a given formulation should be nearly equal. The type of isocyanate, glycol, and polyol can be altered to achieve desired properties. In addition, the hardness or modulus of the resulting polyurethane product can be adjusted through the ratio of long chain to short chain polyols in the system.

Polyurethane systems can be classified according to when and how the components are brought together. "One-shot" systems are formed from mixing the individual components all at once. Quasi-prepolymer systems are those in which a portion of the long chain polyol component is pre-reacted with the isocyanate to form an isocyanate-terminated prepolymer. To form the final product, this prepolymer (typically with an isocyanate content in the 15-25% range) is then reacted with the short chain glycol and the remainder of the long chain polyol component. Full prepolymer systems are prepared by pre-reacting the entire long chain polyol component with the isocyanate. The resulting prepolymer (with an isocyanate content typically less than 12% NCO) is then reacted (or cured) with the short chain polyol or amine to complete the reaction. Due to the high degree of reaction control, full prepolymer-based systems generally exhibit the best overall physical and dynamic properties of any polyurethane elastomer.

Microcellular polyurethane foams suitable for use in industrial applications are not very common. The most common use is in parts known as "jounce bumpers" which act as damping components in automotive strut suspension systems.

The chemical system is based on a polyester-based urethane prepolymer such as the one described in the present invention. However, the isocyanate component most often utilized in the jounce bumpers is 1,5-naphthalene diisocyanate (NDI), as contrasted with methylene diphenyl diisocyanate (MDI)-based systems. MDI-based microcellular systems can be used in other applications including shoe soles, acoustical and isolation damping, engine and tool mounts, and seals and suspension systems. Many of these systems, such as those used in the shoe sole applications, utilize "quasi-prepolymer" systems with isocyanate contents in the 15-30% range.

WO97/23528 and WO99/29752 disclose processes for the preparation of polyurethane elastomers. The processes comprise reacting an isocyanate component with a polyol component. The isocyanate component comprises an isocyanate-terminated prepolymer comprising the reaction product of a stoichiometric excess of a di- or polyisocyanate with a high molecular weight, polyoxypropylene diol, which is an ether.

US 5894927 discloses a process for the recycling of polyurethanes. In a first reaction step of this process comminuted polyurethanes are reacted with (a) polyisocyanates, (b) substances reactive towards isocyanates and containing active hydrogens and optionally (c) chain extenders and/or crosslinkers, catalysts, blowing agents and customary additives, to prepare a prepolymer. The polyisocyanate mentioned to be used are 1,5-NDI, TDI, MDI, HDI and IPDI.

The compounds (b), which are reactive towards isocyanates, comprise polyhydroxyl compounds having a functionality of from 2 to 3 and a molecular weight of from 500 to 6000 g/mol. In a second reaction step this prepolymer is reacted with water and optionally (c) to give a polyurethane. As such, in this process the poly hydroxy compounds react in the first process step, where the prepolymer is formed, and not in the process step where the prepolymer is reacted with water.

Problems discussed herein relate to deficiencies in solid polyurethane systems for achieving low durometers and proper load profiles. Improvement in foam properties of the current invention over typical microcellular products is achieved through the use of a prepolymer approach versus a quasi-prepolymer approach. The use of microcellular polyurethane foams in mechanical and industrial applications has been plagued with problems. One such problem has to do with the difficulty of achieving low durometer, low modulus solid polyurethane cast elastomers with properties capable of competing with soft (<~70 Shore A) rubbers. The current solution for this problem consists of adding plasticizers to polyurethane formulations to soften solid elastomers to the desired hardness. The problem with this approach is that, while proper plasticization does reduce hardness and modulus effectively, other physical, mechanical, and dynamic properties are negatively affected, particularly cut/tear resistance and overall toughness.

Another typical problem encountered with prior art solid polyurethanes is the inability to achieve the compressive load profiles required for certain roller/wheel conveying systems, such as bowling ball lift wheels/tracks and corrugated zero crush rolls. The current solution for this problem is to obtain proper compressive loads with solid elastomer materials, in which complex design elements are utilized. The problem with this approach is that the design elements lead to stress concentrations and fatigue points in the material, thereby reducing product life. Further, from the processing standpoint, sophisticated designs lead to high tooling and engineering costs, which can lead to inefficient production.

The full prepolymer approach generally imparts improved properties over traditional quasi-prepolymer-based systems. Currently, proper force levels are achieved with solid elastomers through part design. The present invention allows the method of achieving desired load compression profiles using a compressible microcellular material, thereby allowing a solid cross-section design to improve part performance and reliability. These material and processing modifications result in design simplification, improved part performance and reliability, and improved processing efficiency. Examples will be presented for specific applications, which demonstrate advances in the art.

### SUMMARY OF THE INVENTION

High performance microcellular polyurethane foam has been developed which is suitable for demanding applications requiring high toughness and excellent dynamic characteristics. The current invention includes full prepolymer systems with isocyanate contents in the 3-12% range. In addition, the high compressibility/extensibility of the cellular material provides a route for producing a low modulus material with physical properties typically not attainable in solid cast polyurethane systems. Such characteristics make the material suitable for numerous applications normally considered outside the realm of conventional solid systems. The unique property profile also allows part design modifications. The present invention includes a method of manufacturing a microcellular polyurethane foam comprising the steps of prepare a curative component by mixing a polyol, water, a foam surfactant, and a catalyst component comprising a standard solid cast polyurethane catalyst and a delayed-action tin catalyst; and mixing the curative component with an isocyanate-terminated prepolymer.

In addition, the techniques used to process the chemical system are different from standard solid cast polyurethane practice. Using particularly controlled water addition, foam surfactant addition, a modified catalyst system, adding a delayed action tin catalyst, and a reduced NCO/OH ratio, the process described herein creates a new high performance microcellular foam. This foam has special application for industrial parts that require a flexible, tough, highly compressible polyurethane material. For example, the present invention is particularly successful in the bowling equipment and the cardboard manufacturing industries.

### BRIEF DESCRIPTION OF THE DRAWINGS

Fig. 1 is a side view of a ball lift wheel using the current invention;
Fig. 2 is a cross-sectional view of a ball lift wheel using the current invention;
Fig. 3 is a cross-sectional view of the first embodiment of a zero crush roller using the current invention;
Fig. 4 is a side view of the first embodiment of a zero crush roller using the current invention;
Fig. 5 is a cross-sectional view of the second embodiment of a zero crush roller using the current invention;
Fig. 6 is a side view of the second embodiment of a zero crush roller using the current invention;
Fig. 7 is a cross-sectional view of the third embodiment of a zero crush roller using the current invention;
Fig. 8 is a side view of the third embodiment of a zero crush roller using the current invention;
Fig. 9 is a cross-sectional view of the fourth embodiment of a zero crush roller using the current invention;
Fig. 10 is a side view of the fourth embodiment of a zero crush roller using the current invention;
Fig. 11 is a cross-sectional view of the prior art bowling ball lift wheel;
Fig. 12 is a side view of the prior art bowling ball lift wheel;
Fig. 13 is a side view of the prior art zero crush roll;
Fig. 14 is a top view of the prior art zero crush roll;
Fig. 15 is a side view of a further prior art zero crush roll; and
Fig. 16 is a top view of a further prior art zero crush roll.

### DETAILED DESCRIPTION OF THE PREFERRED EMBODIMENTS

The current invention involves modifications to existing full prepolymer systems and their processing to allow preparation of a high performance microcellular foam product.

The present invention relates to method of manufacturing a microcellular polyurethane foam comprising the steps of:
selecting a methylene diphenyl diisocyanate (MDI) ester isocyanate-terminated prepolymer containing 3-12% isocyanate functionality contents;
preparing a curative component by mixing a polyol, water, a foam surfactant, and a catalyst component comprising a standard solid cast polyurethane catalyst and a delayed-action tin catalyst wherein said water comprises between 1% and 5% by weight of said curative component; and
mixing said curative component with said MDI ester isocyanate-terminated prepolymer at a functional group (NCO/OH) ratio of about 1:1, provided that if said MDI ester isocyanate-terminated prepolymer is present in excess relative to said curative component, the maximum percentage of said excess is 2%, and the products manufactured according to this method. Further embodiments of the invention are given in the appended claims.

The method of producing the present invention includes, as a first step, the carefully controlled addition of water to the polyol component. The water reacts with the isocyanate end groups of the prepolymer to produce a carbamic acid intermediate. This intermediate immediately reacts with another isocyanate group to form a urea linkage and carbon dioxide gas. The liberated gas serves as the blowing agent in the system. As water level affects foam stiffness and density, water concentrations between 1% and 5% of the curative component have been utilized. Water concentrations between 1.5%-3% of the curative component is the preferred range. By contrast, in standard solid systems, care is taken to eliminate all sources of moisture due to bubble formation and the effect of resultant voids, affecting both aesthetics and performance.

Another step requires the addition of a foam surfactant to the polyol component. The surfactant stabilizes the bubbles formed in the blowing reaction to produce a finer and more consistent cell size and structure. Surfactant levels as low as 1% of the curative component have been found to be effective.

Also, the method of the present invention utilizes a modified catalyst system. A catalyst system is required which provides proper balance between the gelling and blowing reaction during mixing. The system consists of a standard solid cast polyurethane catalyst (i.e., DABCO 33LV) which, in the microcellular system, is effective in promoting the water reaction. In addition, a delayed action tin catalyst (i.e., Topcat 290) is added to drive the gelling reaction to completion. A ratio of 1.25:1 tin catalyst:solid cast polyurethane catalyst has been found to produce acceptable product. Without the tin catalysis, the integrity of the supporting polyurethane structure is slow to develop. As a result, fine cell structure is not achieved and dimensional stability of the foam is sacrificed.

The concentration of the catalyst in the polyol component can be adjusted to obtain the desired cream, tack-free, and demold times. Variables such as part size, part geometry, machine output, and productivity requirements will influence the catalyst level used. Concentrations of 0.5%-0.6% of the curative component has been used successfully to provide cream times of 10-20 seconds, tack free times of 45-60 seconds, and demold times of 10-20 minutes. These demold times represent a significant decrease over comparable solid cast systems which typically require 30 minutes to one hour to develop the material strength required to demold parts without damage.

Finally, this method requires stoichiometry adjustment. The ratio of isocyanate groups to hydroxyl groups (typically called NCO/OH index) is an important parameter in polyurethane processing. While solid cast systems can be processed throughout a wide range of NCO/OH indices, the best overall elastomer properties are typically obtained at ratios in the 1.02-1.03 range. The slight excess of isocyanate groups at these ratios presumably leads to a slightly cross-linked structure which imparts the properties characteristic of full prepolymer solid cast systems, i.e., low compression set, excellent dynamic properties, and temperature resistance.

It has been found that the microcellular systems described in the current invention cannot be successfully produced within the typical NCO/OH ratios greater than 1.02, which are characterized by slow build-up of foam integrity, resulting in a product with coarse cell structure and poor dimensional stability. Similar results have been seen at NCO/OH ratios at or below 0.95. Based on observations thus far, acceptable cell structure can be obtained at ratios between 0.96 and 1.02. However, for production of optimum microcellular product, NCO/OH index should be controlled most preferably between 0.98 and 1.00.

Processing methods for the microcellular systems are similar to solid cast prepolymer systems in many respects. The components are heated and accurately metered via precision gear pumps into a dynamic mixhead. A prepolymer temperature of 77°C to 88°C (170°F to 190°F) is generally required to reduce viscosity to the 500-1500 milipascal second (500-1500 centipoise) level, allowing more efficient pumping and mixing with the low viscosity curative. Curative temperatures between room temperature and 66°C (150°F) are typical for standard liquid curatives. Solid curatives require temperatures above their melting point. Once mixed, the material is dispensed into properly designed capped molds with appropriate venting to allow displacement of air as the system foams within the cavity. The following steps represent further unique differences in manufacturing the present invention versus its solid system counterparts.

The removal of dissolved gas from the prepolymer component of a solid cast system is critical for producing high quality void-free parts and is standard practice in solid cast polyurethane processing. Degassing is typically accomplished by either batch or continuous (thin film) methods by subjecting the prepolymer resin to a vacuum of at least 3,3 kPa (25mm Hg) until the majority of the dissolved gases are removed. It has been found that the use of the standard prepolymer degassing step in the preparation of the microcellular foam of the present invention produces an unacceptable product with coarse, non-uniform cell structure. Thus, unlike solid cast systems, dissolved gases in the system of the present invention need not be removed and, in fact, are critical to the formation of acceptable foam structure. The dissolved gas acts to provide nucleation sites, which stabilize initial bubble formation. In order to control the gas content of the system, it has been found beneficial to maintain the prepolymer under elevated pressures during processing. The higher pressure assists in solubilizing sufficient gas to adequately nucleate the system and prevents the dissolved gas from diffusing out of the material. Application of 4,1-6,9 bar (60-100 psi) of dry nitrogen to the component tank has been found to be satisfactory for this purpose.

The formation of small, well dispersed bubbles during the initial stages of reaction are critical for producing the fine uniform cell structure noted in these systems. While eliminating the standard prepolymer degassing step is the most convenient approach to ensure gas content in the system, introduction of a gas at the mixhead is also a feasible approach. This can be accomplished effectively through the use of a mixer impeller design, which acts to whip air into the mixture. Another approach is the addition of a controlled amount of gas into the mixhead. This can be accomplished, for example, with a flowmeter-pressure regulator-needle valve arrangement capable of maintaining and controlling low gas flow rates.

Because of the nature of the catalyst system used, processing temperatures are also critical to producing the present invention. As mentioned above, component temperatures for microcellular systems lie in the same range as standard solid cast systems. However, the typical mold temperature range utilized for solid cast systems (121-93°C (200-250°F)) is not appropriate. Due primarily to the temperature-dependence of the tin catalyst present in the system, mold temperature must be maintained between 71-93°C (160-200°F). At temperatures outside of this range, unacceptable foam product is produced due to an improper balance in the competing water and urethane reactions. Defects due to improper temperature control include poor cell structure, scorched part surface, and other surface defects.

The microstructure of cellular polyurethane consists of thin polyurethane/urea walls which define domains (called cells) containing air or other gas. Thus, by definition, the density of microcellular compounds is somewhat less than that of the solid elastomer. The property profile of a given microcellular system is largely determined by this density, which must be taken into consideration during the design and production of foam parts. Various molded densities may be obtained from a given microcellular formulation by filling the mold cavity to different degrees. Consequently, tight control over the shot size of each pour is necessary to produce parts with a consistent molded density.

The so-called free rise density is defined as the density of the foam when allowed to blow and rise without constraint. The free rise density is characteristic of a given formulation and can provide a check that the formulation and parameters are within proper ranges. Factors affecting free rise density are water content in the formulation, catalyst level, and mold and component temperatures. Typically, enough material is introduced into the cavity to produce a molded part density, which is 1.5 to 2 times the free rise density. With insufficient material addition, the microcellular material may not completely fill the cavity or it may collapse or shrink after demold. If too much material is added, the pressure build-up in the mold may become excessive and the part may expand after demold making it difficult to hold dimensional tolerances. For the microcellular compounds of the current invention, free rise densities of 0,26-0,32 kg/dm³ (16-20 pounds per cubic foot (pcf)) and molded part densities in the 0,39-0,64 kg/dm³ (25-40 pcf) range are typical.

Additional high temperature cure of solid cast elastomer parts after demold is standard practice. This postcure is necessary to complete the curing process and provide a material with optimum properties. Typical postcures of 16 hours or more at temperatures in excess of 109°C (230°C) are common. Microcellular parts develop strength very quickly during the reaction. In a very short time period after mixing, near optimum physical properties are achieved. As a result, microcellular parts can be demolded much faster than solid cast parts and any additional postcure cycle can be eliminated.

The microcellular materials described above offer many advantages over solid systems. The microcellular materials provide the ability to achieve low modulus, highly flexible polyurethane material and parts which exhibit excellent physical properties, including high toughness, tear resistance, high compressibility, and puncture resistance. These methods produce excellent dynamic properties, including greater fatigue resistance due to less resistance to deformation. Easier and more efficient processing occurs due to faster demold times, no need for a prepolymer degassing step or postcure cycle, and reduced care needed in material handling to protect components from atmospheric moisture.

### EXAMPLE

**Isocyanate Prepolymer: Baytec MS-242 (6.7% NCO MDI-ester prepolymer)**

| | | |
|---|---|---|
| Curative: | 64% | Triethylene Glycol |
| | 32% | 1,4-Butanediol |
| | 2.5% | Water |
| | 0.30% | Topcat 290 catalyst |
| | 0.24% | DABCO 33LV catalyst |
| | 1.0% | DC-193 Surfactant |

The components, when mixed at an NCO/OH ratio of 1.00, produce a microcellular product with a free rise density of 0,27-0,28 kg/dm³ (17-18 pounds per cubic foot (pcf)), a cream time of 12-15 seconds, a tack free time of 45-60 seconds, and a demold time of 15 minutes. Parts molded in the 0,39-0,48 kg/dm³ (25-30 pcf) range have been found to be useful in a number of applications including those described below.

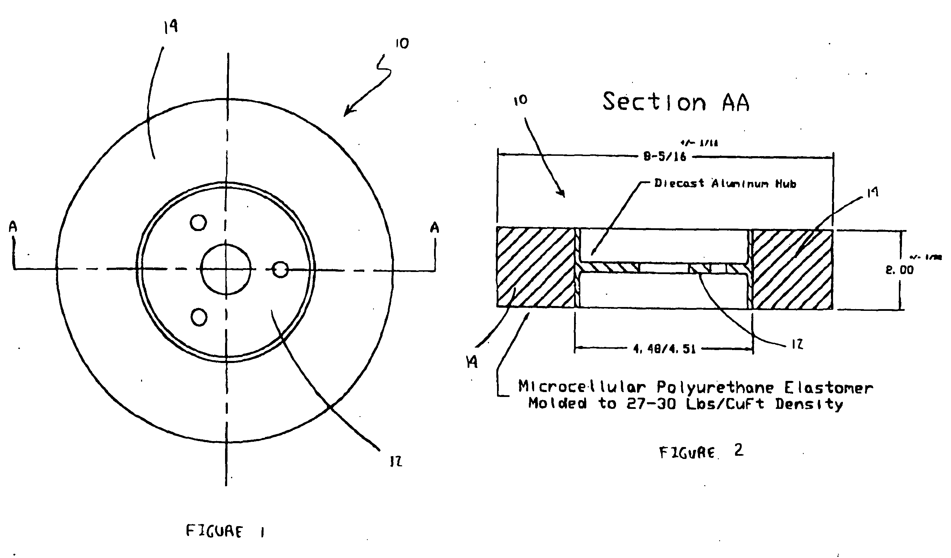

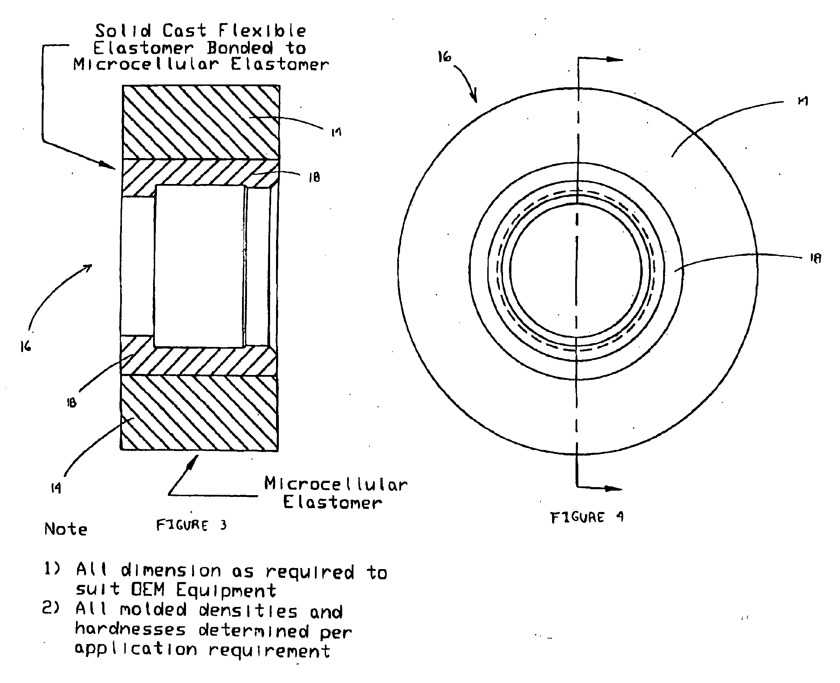

A first application utilizing the present invention includes bowling ball lift wheels and lift tracks, which are used as components of OEM bowling equipment and which are designed to change the elevation of bowling balls from below grade to a comfortable height at the ball return station. As seen in Figs. 1 and 2, the bowling ball lift wheel 10 consists of a circular hub 12 surrounded by a circular molded foam 14 manufactured from the present invention. Overall, the bowling ball lift wheel 10 appears tire-like, with the circular hub 12 acting as the rim and the circular molded foam 14 acting as the tire. There are two bowling ball lift wheels 10 used in a counter rotating sense on each ball lift mechanism. The bowling ball lift wheels 10 are separated a certain distance in a vertical sense and each bowling ball lift wheel 10 is nested inside a set of two concentric arcs of opposite orientation. The lift tracks (not shown) are mounted to two parallel steel "C" tracks which comprise each concentric arc. The lift tracks provide the proper fit to effectively convey the ball through the mechanism as well as to provide a soft durable transport surface which will not mark or mar the ball.

Once ejected from the back of the alley, the bowling ball returns via a track to the ball lift mechanism. At this point, the ball is trapped by way of interference between the lower bowling ball lift wheel 10 and the lift tracks. The lower bowling ball lift wheel 10 (rotating in a counter-clockwise direction as viewed from the left) deforms against the ball surface, generating force in order to lift the bowling ball through the arc until it is contacted by the upper bowling ball lift wheel 10. At this point, the ball is transferred to the upper lift tracks and upper bowling ball lift wheel 10 (rotating clockwise as viewed from the left), the direction of the ball is changed and the ball rolls along the upper arcs until interference is lost and the ball is released at the new elevation.

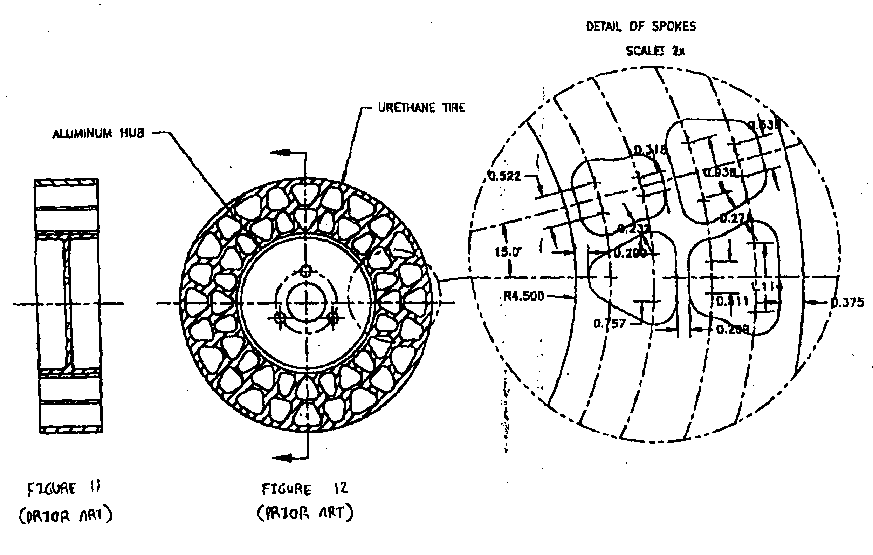

The advantages of using the present invention in this application are numerous. The soft pliable surface of the present invention is much softer than any current lift wheel designs. This results in a component that will not damage the surface of bowling balls and is completely non-marking. The solid cross-section of the bowling ball lift wheel 10 of the present invention is much less susceptible to failure when compared to the webbed design of the prior art waffle-style wheel (shown in Figs. 11 and 12) and thinner cross-section of the V-style wheels. Further, the solid cross-section transfers much less force to the interface of the bonded metal and foam, reducing failures associated with delamination of the circular molded foam 14 and the circular hub 12. The simple design allows for solid cross-section parts using less material than current designs, and the pliable full cross-section design allows for continual wear without failure. Damping nature of the present invention allows for smoother, quieter operation. The present invention is manufactured from simple inexpensive tooling compared to current designs, and, additionally, is manufactured much more efficiently than cast elastomer designs.

A second application of the present invention involves zero crush rolls 16, which are used in the manufacturing process for producing corrugated board-stock. During the manufacturing process, rolls of paper stock are fed into a corrugator machine. The corrugator applies a liquid starch and glue to the surfaces of the paper stock. Once the starch and glue is applied, the paper is fed through a series of rollers that form the paper to a corrugated configuration. After the paper stock is corrugated, additional sheets of paper are laminated to both sides. The end result is a corrugated board made-up of various layers of paper stock. The process of manufacturing the corrugated board-stock is a continuous process that requires a conveyor system to handle the fresh board so as not to crush the corrugated portion of the board.

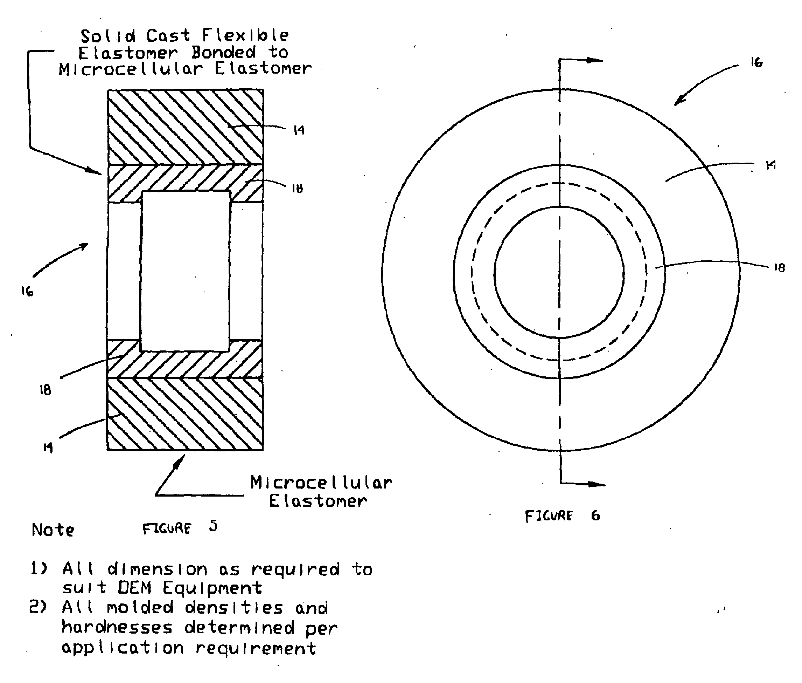

The conveyor system is made-up of a series of parallel steel shaft rollers mounted with bearings to a steel frame. As seen in Figs. 3 and 4, the zero crush rolls 16 of the first embodiment consist of a circular molded solid cast elastomer 18 and a circular molded foam 14 of the present invention bound to the circular molded solid cast elastomer 18. The zero crush rolls 16 are either pressed onto or mounted to the steel rollers with the circular molded solid cast elastomer 18 capturing a bearing. The zero crush rolls 16 are designed to deflect easily under the weight of the board-stock being conveyed. The deflection of the zero crush rolls 16 preserves the integrity of the corrugated configuration as it is being conveyed in the wet state.

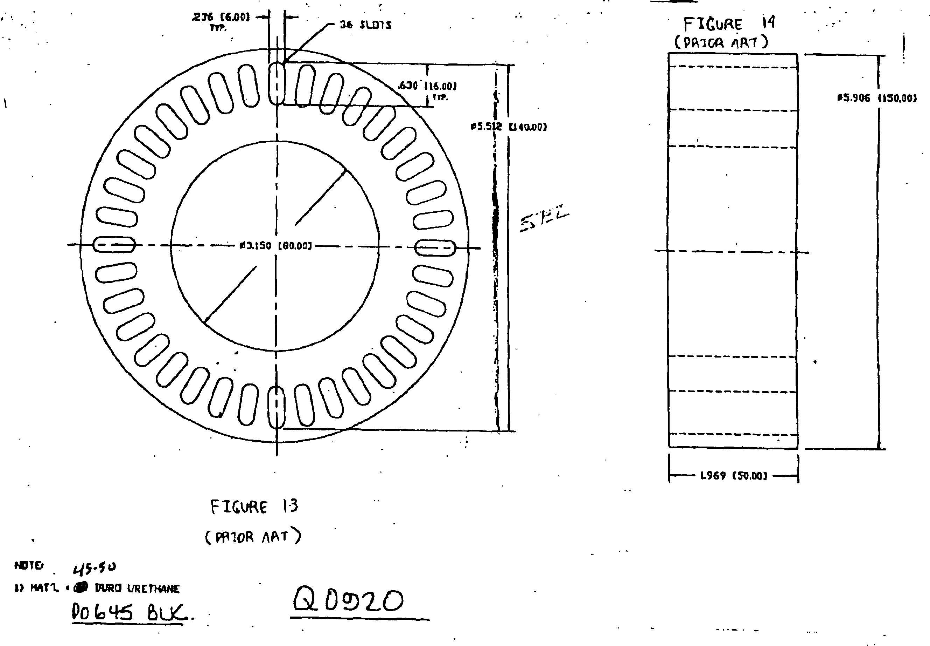

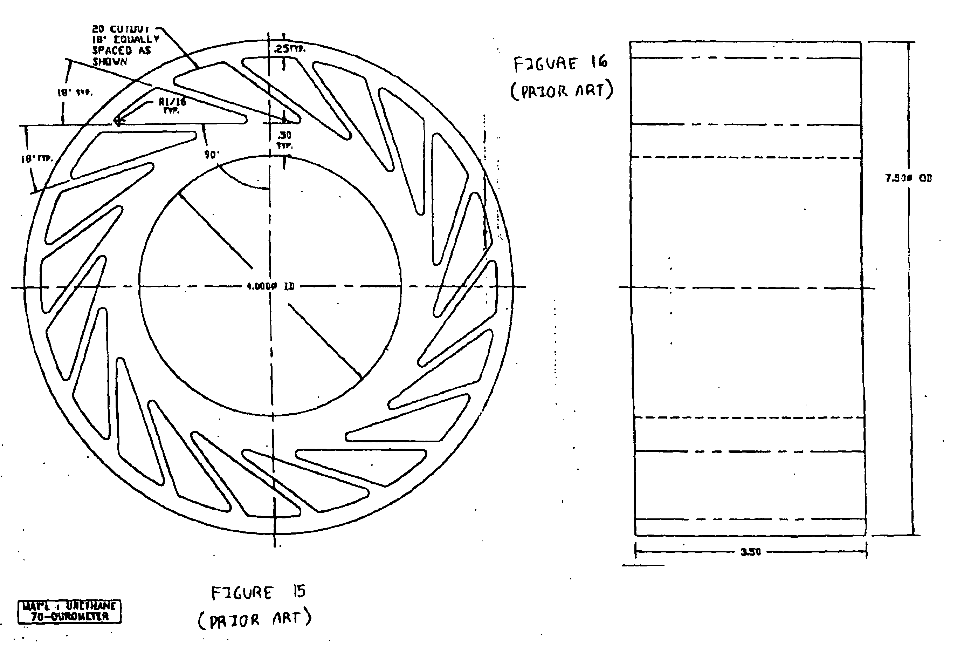

Prior art zero crush rolls, as seen in Figs. 13-16 are designed with two concentric rings that are joined together by a series of angular positioned ribs or ovular cut-outs. The preferred material is polyurethane that allows the roller to be cast as a homogeneous part. The thickness of these angular ribs or ovular cut-outs, along with the spacing, determines the deflection modulus of the prior art zero crush rolls. As the board-stock is conveyed the ribs or cut-outs on the zero crush rolls are constantly flexing. This constant flexing causes the ribs and cut-outs to fatigue resulting in the failure of the zero crush rolls.

The zero crush rolls 16 of the present invention do not require ribs by design, eliminating the major cause of failure in the current zero crush wheels. By engineering the ribs out of the wheels, the end user can expect longer life from them. This extra life reduces machine downtime due to fewer changeovers, therefore improving machine productivity. Due to the design simplification, the tooling cost to produce the zero crush rolls 16 is reduced significantly. This design simplification allows higher quality zero crush rolls 16 to be produced without incurring extra expense. This equates to a cost saving for the end user. The same tooling can be used to produce a variety of zero crush rolls 16 that have different deflection modulus properties. This is accomplished by changing the density of the present invention.

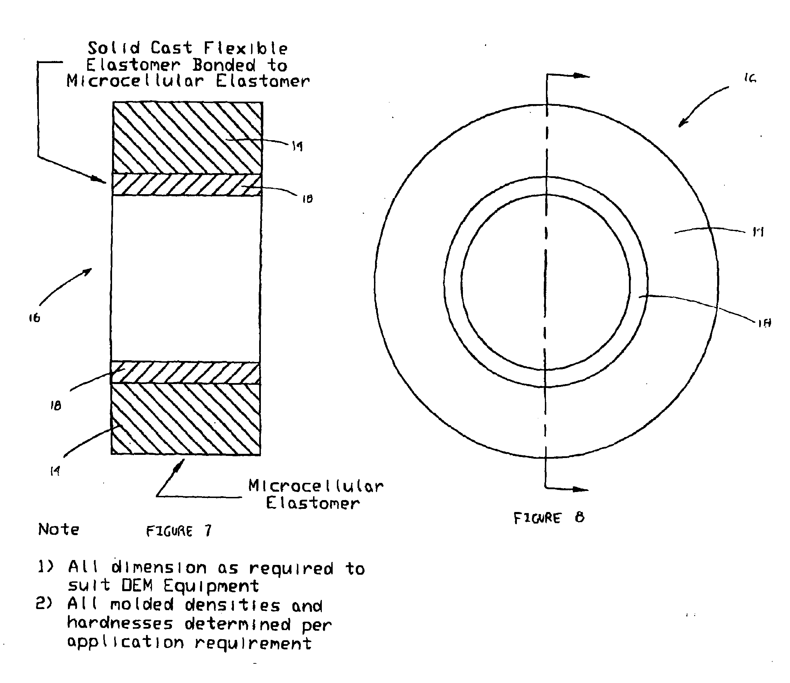

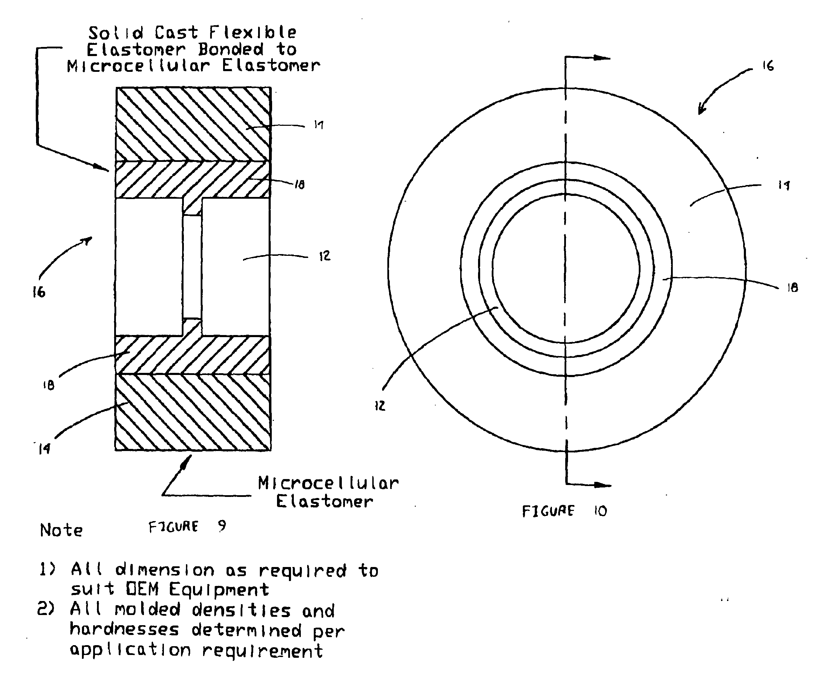

The second embodiment of the zero crush rolls application is shown in Figs. 5 and 6. This embodiment varies the shape of the circular molded solid cast elastomer 18, but, as to the present invention, utilizes the same circular molded foam 14. Similarly, the third embodiment of the zero crush rolls application, as seen in Figs. 7 and 8, differs from the first and second embodiments only with respect to the shape of the circular molded solid cast elastomer 18. In the third embodiment, again the circular molded foam 14 of the present invention is bound to the circular molded solid cast elastomer 18. Finally, Figs. 9 and 10 show a fourth embodiment of the zero crush rolls application. Again, this embodiment uses the circular molded foam 14 of the present invention bound to a circular molded solid cast elastomer 18 of a differing cross-section than the previous embodiments.

The present invention is also applicable to other applications in addition to those mentioned above. In the bowling industry, the present invention can be utilized in the manufacture of ball lift wheels, ball lift tracks, pit cushions, deck pads and ball polishing tools. In the corrugated industry, the foam of the present invention may be used in manufacturing zero crush wheels, lead edge feed wheels, pull rolls, taper rolls, and die ejection material. The present invention is also applicable in the creation of sporting goods, such as archery targets, bicycle seat cushions, protective pads and helmets. Various other applications are also anticipated, for example, medical body support pads, outrigger pads, impact absorbing sheets, custom packaging, anti-vibration spacers and mounts, springs, protective coverings, sound dampening material, seals, and insulation.

## Claims

1. A method of manufacturing a microcellular polyurethane foam comprising the steps of:
selecting a methylene diphenyl diisocyanate (MDI) ester isocyanate-terminated prepolymer containing 3-12% isocyanate functionality contents;
preparing a curative component by mixing a polyol, water, a foam surfactant, and a catalyst component comprising a standard solid cast polyurethane catalyst and a delayed-action tin catalyst wherein said water comprises between 1% and 5% by weight of said curative component; and
mixing said curative component with said MDI ester isocyanate-terminated prepolymer at a functional group (NCO/OH) ratio of about 1:1, provided that if said MDI ester isocyanate-terminated prepolymer is present in excess relative to said curative component, the maximum percentage of said excess is 2%.

2. The method of claim 1 further comprising the step of dispensing the reactive mixture into a mold to cure

3. The method of claim 2 further comprising the step of maintaining a mold temperature of about 71°C (160°F) to about 93°C (200°F).

4. The method of claim 2-3 wherein the mold is configured to form a solid circular tire for attachment to a hub of a bowling ball lift wheel.

5. The method of claim 2-4 wherein the mold is configured to form a solid circular tire for attachment to a molded solid cast elastomer, which is attached to a steel roller for use as a zero crush roll in the manufacturing process for producing corrugated board-stock.

6. The method of claim 1-5 further comprising the step of preheating the prepolymer prior to the introduction of the curative component.

7. The method of claim 1-6 further comprising the step of injecting a gas into the mixture of the curative component of the prepolymer.

8. The method of claim 1-7 wherein the isocyanate-terminated prepolymer has an isocyanate functionality contents of 3 to less than 10%.

9. The method of claim 1-8 wherein the water concentration is between about 1.5 to about 3% by weight of the curative component.

10. The method of claim 1-9 wherein the foam surfactant concentration is above about 1% of the curative component.

11. The method of claim 1-10 wherein the ratio of tin catalyst to standard solid cast polyurethane catalyst in the catalyst component is about 1.25:1.

12. The method of claim 1-11 wherein the catalyst component concentration is between about 0.5 to about 0.6% of the curative component.

13. The method of claim 1-12 wherein the NCO to OH ratio is between about 0.96 and 1.02.

14. The method of claim 1 further comprising configuring a mold to a shape defining a solid circular tire for attachment to a hub of a bowling ball wheel lift; and molding the mixture thus produced in said mold.

15. The method of claim 14 comprising
attaching the solid circular tire thus formed to a molded solid cast elastomer; and
attaching said molded solid cast elastomer to a steel roller for use as a zero crush roll in the manufacturing process for producing corrugated boardstock.

16. The method of claim 1 further comprising the step of applying pressure to one or both of the components during processing.

17. The product manufactured according to the method of one of the preceding claims.

## Patentansprüche

1. Verfahren zur Herstellung eines mikrozellulären Polyurethan-Schaumstoffs, umfassend die Schritte:
Auswählen eines Methylendiphenyldiisocyanat(MDI)-Esterisocyanat-terminierten Vorpolymers, das 3-12 % Isocyanat-Funktionalitätsgehalt enthält;
Herstellen einer Härtungskomponente durch Mischen eines Polyols, von Wasser, eines Schaumtensids und einer Katalysatorkomponente, die einen Standard-Vollguss-Polyurethan-Katalysator und einen Zinn-Katalysator mit verzögerter Wirkung umfasst, wobei das Wasser zwischen 1 und 5 Gew.-% der Härtungskomponente umfasst; und
Mischen der Härtungskomponente mit dem MDI-Esterisocyanat-terminierten Vorpolymer bei einem Verhältnis von funktionellen Gruppen (NCO/OH) von etwa 1:1, mit der Maßgabe, dass, wenn das MDI-Esterisocyanatterminierte Vorpolymer im Überschuss relativ zu der Härtungskomponente vorliegt, der maximale Prozentsatz des Überschusses 2 % beträgt.

2. Verfahren nach Anspruch 1, weiter umfassend den Schritt des Abfüllens der reaktiven Mischung in eine Form zur Härtung.

3. Verfahren nach Anspruch 2, weiter umfassend den Schritt der Aufrechterhaltung einer Formtemperatur von über 71 °C (160°F) bis etwa 93°C (200°F).

4. Verfahren nach Anspruch 2-3, in dem die Form so konfiguriert ist, dass ein fester kreisförmiger Reifen zur Anbringung an eine Nabe eines Bowlingkugel-Anheberads gebildet wird.

5. Verfahren nach Anspruch 2-4, in dem die Form so konfiguriert ist, dass ein fester kreisförmiger Reifen zur Anbringung an ein pressgeformtes Vollguss-Elastomer gebildet wird, welches an einer Stahlwalze zur Verwendung als Null-Brechwalzwerk im Herstellungsverfahren zur Herstellung von Wellpappe befestigt ist.

6. Verfahren nach Anspruch 1-5, weiter umfassend den Schritt des Vorerwärmens des Vorpolymers vor der Einführung der Härtungskomponente.

7. Verfahren nach Anspruch 1-6, weiter umfassend den Schritt des Einspritzens eines Gases in die Mischung der Härtungskomponente des Vorpolymers.

8. Verfahren nach Anspruch 1-7, in dem das Isocyanat-terminierte Vorpolymer einen Isocyanat-Funktionalitätsgehalt von 3 bis weniger als 10 % aufweist.

9. Verfahren nach Anspruch 1-8, in dem die Wasserkonzentration zwischen etwa 1,5 bis etwa 3 Gew.-% der Härtungskomponente liegt.

10. Verfahren nach Anspruch 1-9, in dem die Schaumtensid-Konzentration über etwa 1 % der Härtungskomponente liegt.

11. Verfahren nach Anspruch 1-10, in dem das Verhältnis des Zinn-Katalysators zum Standard-Vollguss-Polyurethan-Katalysator in der Katalysatorkomponente etwa 1,25:1 beträgt.

12. Verfahren nach Anspruch 1-11, in dem die Katalysatorkomponenten-Konzentration zwischen etwa 0,5 bis etwa 0,6 % der Härtungskomponente liegt.

13. Verfahren nach Anspruch 1-12, in dem das Verhältnis von NCO zu OH zwischen etwa 0,96 und 1,02 liegt.

14. Verfahren nach Anspruch 1, weiter umfassend das Konfigurieren einer Form zu einer Gestalt, die einen festen kreisförmigen Reifen zur Anbringung an einer Nabe einer Bowlingkugel-Radhebevorrichtung begrenzt; und Formen der so erzeugten Mischung in der Form.

15. Verfahren nach Anspruch 14, umfassend
Anbringen des so gebildeten festen kreisförmigen Reifens an einem pressgeformten Vollguss-Elastomer; und
Anbringen des pressgeformten Vollguss-Elastomers an einer Stahlwalze zur Verwendung als Null-Brechwalze im Herstellungsverfahren zur Herstellung von Wellpappe.

16. Verfahren nach Anspruch 1, weiter umfassend den Schritt der Anwendung von Druck auf eine oder beide der Komponenten während der Verarbeitung.

17. Produkt, hergestellt gemäß dem Verfahren nach einem der vorangehenden Ansprüche.

## Revendications

1. Procédé pour fabriquer une mousse de polyuréthane microalvéolaire comprenant les étapes de :
sélectionner un prépolymère à terminaison isocyanate ester diphényldiisocyanate de méthylène (MDI) ayant une teneur en fonctionnalité isocyanate de 3 à 12 % ;
préparer un composant durcisseur en mélangeant un polyol, de l'eau, un tensioactif en mousse, et un composant catalyseur comprenant un catalyseur de polyuréthane coulé plein standard et un catalyseur à l'étain à action retardée, où ladite eau comprend entre 1 % et 5 % en poids dudit composant durcisseur ; et
mélanger ledit composant durcisseur avec ledit prépolymère à terminaison isocyanate ester MDI avec un rapport des groupes fonctionnels (NCO/OH) d'environ 1/1, sous réserve que, si ledit prépolymère à terminaison isocyanate ester de MDI est présent en un excès par rapport audit composant durcisseur, le pourcentage maximal dudit excès soit de 2 %.

2. Procédé selon la revendication 1, comprenant en outre l'étape de verser le mélange réactionnel dans un moule pour qu'il durcisse.

3. Procédé selon la revendication 2, comprenant en outre l'étape de maintenir une température de moule d'environ 71°C (160°F) à environ 93°C (200°F).

4. Procédé selon la revendication 2-3, dans lequel le moule est configuré de manière à former un chemin de roulement circulaire plein devant être attaché à un moyeu de roue d'un dispositif de remontée de boule de bowling.

5. Procédé selon la revendication 2-4, dans lequel le moule est configuré pour former un chemin de roulement circulaire plein devant être attaché à un élastomère coulé plein moulé, qui est attaché à un rouleau en acier pour être utilisé en tant que cylindre sans déformation dans le procédé de fabrication pour produire un stock de carton ondulé.

6. Procédé selon la revendication 1-5, comprenant en outre l'étape de préchauffer le prépolymère avant l'introduction du composant durcisseur.

7. Procédé selon la revendication 1-6, comprenant en outre l'étape d'injecter un gaz dans le mélange du composant durcisseur du prépolymère.

8. Procédé selon la revendication 1-7, dans lequel le prépolymère à terminaison isocyanate a une teneur en fonctionnalité isocyanate de 3 à moins de 10 %.

9. Procédé selon la revendication 1-8, dans lequel la concentration d'eau est comprise entre d'environ 1,5 et à environ 3 % en poids du composant durcisseur.

10. Procédé selon la revendication 1-9, dans lequel la concentration de tensioactif en mousse est supérieure à environ 1 % du composant durcisseur.

11. Procédé selon la revendication 1-10, dans lequel le rapport du catalyseur à l'étain au catalyseur au polyuréthane coulé plein standard dans le composant catalyseur est d'environ 1,25/ 1.

12. Procédé selon la revendication 1-11, dans lequel la concentration de composant catalyseur est comprise entre d'environ 0,5 à environ 0,6 % du composant durcisseur.

13. Procédé selon la revendication 1-12, dans lequel le rapport de NCO à OH est compris entre environ 0,96 et 1,02.

14. Procédé selon la revendication 1, comprenant en outre la configuration d'un moule en une forme définissant un chemin de roulement circulaire plein pour l'attache à un moyeu d'un dispositif de remontée à roue de boule de bowling ; et le moulage du mélange ainsi produit dans ledit moule.

15. Procédé selon la revendication 14, comprenant :
l'attache du chemin de roulement circulaire plein ainsi formé à un élastomère coulé plein moulé ; et
l'attache dudit élastomère coulé plein moulé à un rouleau en acier pour l'utilisation en tant que cylindre sans déformation dans le procédé de fabrication pour la production d'un carton ondulé.

16. Procédé selon la revendication 1, comprenant en outre l'étape d'application d'une pression à l'un ou aux deux des composants durant le traitement.

17. Produit manufacturé conformément au procédé de l'une des revendications précédentes.
